# EUROPEAN PATENT APPLICATION

(11) **EP 2 365 035 A1**
(43) Date of publication of application: **14.09.2011**
(21) Application number: 09818992.1
(22) Date of filing: 08.10.2009
(51) Int. Cl.: C09C 1/00, A01G 13/00, C01G 51/00, C08K 3/22, C08L 101/00, C09C 1/02, C09C 1/04, C09C 1/22, C09C 1/28, C09C 1/40, C09D 7/12

(54) **INORGANIC BLACK PIGMENT, COATING MATERIAL AND RESIN COMPOSITION EACH USING THE INORGANIC BLACK PIGMENT, AND MULTIFILM FOR AGRICULTURAL USE**

(30) Priority: 09.10.2008 JP 2008263134
(71) Applicant: Toda Kogyo Corporation, Hiroshima 739-0652 (JP)
(72) Inventor: SANADA, Kazutoshi, Otake-shi Hiroshima 739-0652 (JP); MARUYAMA, Shinsuke, Otake-shi Hiroshima 739-0652 (JP)
(74) Representative: Woods, Geoffrey Corlett
(86) International application number: PCT/JP2009/005242
(87) International publication number: WO 2010/041452

(57) **Abstract**

The present invention provides an inorganic black pigment which comprises no harmful elements and has an excellent infrared reflecting property and an excellent light transmittance. The inorganic black pigment of the present invention comprises a composite oxide comprising Fe, Co and Al as well as at least one metal element selected from the group consisting of Mg, Ca, Sr, Ba, Ti, Zn, Sn, Zr, Si and Cu, which inorganic black pigment has an average primary particle diameter of 0.02 to 2.0 *µ*m, an average reflectance of not less than 10% as measured in a wavelength range of 300 to 2500 nm from a visible light region to an infrared region, and an average light transmittance of not less than 10% as measured in a wavelength range of 300 to 2500 nm from a visible light region to an infrared region.

## Description

### TECHNICAL FIELD

The present invention relates to an agricultural multi-film used for covering a ground surface in agricultural houses or upon culture of crops to provide suitable environments for growth of the crops. In addition, the present invention also relates to an inorganic black pigment which comprises no harmful elements and exhibits a light-shielding property and a heat-retaining property and further an excellent infrared reflection property and a high light transmittance, as well as an agricultural multi-film using the inorganic black pigment.

### BACKGROUND ART

The agricultural multi-film has been generally used for the purposes of retention of geothermal heat, adjustment of water content in soils, control of damages owing to insects and weeds and prevention of solidification of soils by rainfall. The agricultural multi-film is usually formed of a plastic film such as a vinyl film and a polymer film.

However, when using the general agricultural multi-film formed of a plastic film such as a vinyl film and a polymer film, the temperature within the plastic film covering crops tends to be excessively raised. As a result, it is necessary to conduct a temperature control by opening a skirt portion of the film, etc.

In consequence, it has been strongly required to shield a visible light for suppressing growth of weeds, enhance a light transmittance for suppressing rapid change in temperature of soils, maintain a suitable temperature in the vicinity of roots of crops which is needed for growth of the crops, and provide environments suitable for the crops.

Conventionally, there is known a heat-shielding infrared reflecting black pigment which comprises no harmful elements and has an excellent infrared reflecting property (Patent Document 1). Also, there is known a black agricultural multi-film in which magnetite is used for allowing the film to exhibit a function of suppressing transmission of light which induces photosynthesis and has a wavelength of about 600 to about 700 nm (Patent Document 2). Further, there is known an agricultural multi-film having a multi-layer structure formed of a polyolefin-based resin which includes a white layer provided on one surface of the film and a black layer provided on the other surface thereof (Patent Document 3).

Patent Document 1: Japanese Patent Application Laid-Open (KOKAI) No. 2007-189986
Patent Document 2: Japanese Patent Application Laid-Open (KOKAI) No. 7-118441
Patent Document 3: Japanese Patent Application Laid-Open (KOKAI) No. 2007-197570

### DISCLOSURE OF THE INVENTION

### PROBLEMS TO BE SOLVED BY THE INVENTION

At present, it has been strongly required to develop an inorganic black pigment which comprises no harmful elements and is capable of providing a paint having an excellent infrared reflecting property and a high light transmittance. However, such an inorganic black pigment has not been obtained yet until now.

That is, in Patent Document 1, there is described the composite oxide comprising Fe, Co and Al as well as at least one metal element selected from the group consisting of Mg, Ca, Sr, Ba, Ti, Zn, Sn, Zr, Si and Cu. However, since no definition concerning a particle diameter of secondary aggregated particles is specified therein, the composite oxide may fail to exhibit a sufficient effect of enhancing a solar radiation transmittance.

Also, in Patent Document 2, there is described the black pigment comprising Fe₃O₄. However, since Fe₃0₄ absorbs an infrared ray and has a low solar radiation reflectance, a soil temperature when using the black pigment therein tends to be rapidly increased, so that the black pigment may fail to provide environments suitable for crops.

In addition, in Patent Document 3, there is described the agricultural multi-film having a multi-layer structure in which carbon black is used in the black layer and titanium dioxide is used in the white layer. However, the multi-film is required to control a density value or a thickness of the white layer and therefore has limitations to use conditions thereof. Thus, the multi-film of Patent Document 3 may fail to exhibit sufficient effects.

A technical subject of the present invention is to provide an inorganic black pigment which comprises no harmful elements, and is in the form of a black pigment having an excellent infrared reflecting property and a high light transmittance.

### MEANS FOR SOLVING THE PROBLEMS

The above object or technical task of the present invention can be achieved by the following aspects of the present invention.

That is, according to the present invention, there is provided an inorganic black pigment comprising a composite oxide comprising Fe, Co and Al as well as at least one metal element selected from the group consisting of Mg, Ca, Sr, Ba, Ti, Zn, Sn, Zr, Si and Cu, which inorganic black pigment has an average primary particle diameter of 0.02 to 2.0 µm and an average secondary particle diameter D₉₉ of 0.08 to 8.0 µm (Invention 1).

Also, according to the present invention, there is provided the inorganic black pigment as described in the above Invention, wherein the inorganic black pigment has a visible light reflectance of not more than 10% and a solar radiation reflectance of not less than 15% (Invention 2).

Also, according to the present invention, there is provided the inorganic black pigment as described in the above Inventions, wherein the inorganic black pigment has a visible light transmittance of not more than 10% and a solar radiation transmittance of not less than 10 (Invention 3).

In addition, according to the present invention, there is provided a paint comprising the inorganic black pigment as described in any one of the above Inventions, and a paint base material (Invention 4).

Further, according to the present invention, there is provided a colored resin composition comprising the inorganic black pigment as described in any one of the above Inventions, and a thermoplastic resin (Invention 5).

Furthermore, according to the present invention, there is provided an agricultural multi-film comprising the inorganic black pigment as described in any one of the above Inventions, and a thermoplastic resin (Invention 6).

In addition, according to the present invention, there is provided a paint comprising an inorganic black pigment and a paint base material, which inorganic black pigment in the paint comprises a composite oxide comprising Fe, Co and Al as well as at least one metal element selected from the group consisting of Mg, Ca, Sr, Ba, Ti, Zn, Sn, Zr, Si and Cu, and has an average primary particle diameter of 0.02 to 2.0 µm and a secondary particle diameter D₉₉ of 0.08 to 8.0 µm (Invention 7).

Further, according to the present invention, there is provided a colored resin composition comprising an inorganic black pigment and a thermoplastic resin, which inorganic black pigment in the colored resin composition comprises a composite oxide comprising Fe, Co and Al as well as at least one metal element selected from the group consisting of Mg, Ca, Sr, Ba, Ti, Zn, Sn, Zr, Si and Cu, and has an average primary particle diameter of 0.02 to 2.0 µm and a secondary particle diameter D₉₉ of 0.08 to 8.0 µm (Invention 8).

Furthermore, according to the present invention, there is provided an agricultural multi-film comprising an inorganic black pigment and a thermoplastic resin, which inorganic black pigment in the agricultural multi-film comprises a composite oxide comprising Fe, Co and Al as well as at least one metal element selected from the group consisting of Mg, Ca, Sr, Ba, Ti, Zn, Sn, Zr, Si and Cu, and has an average primary particle diameter of 0.02 to 2.0 µm and a secondary particle diameter D₉₉ of 0.08 to 8.0 µm (Invention 9).

### EFFECTS OF THE INVENTION

The inorganic black pigment according to the present invention exhibits a black color and is excellent in infrared reflecting property and light transmittance, and therefore can be suitably used as a black pigment for an agricultural multi-film.

### PREFERRED EMBODIMENTS FOR CARRYING OUT THE INVENTION

The construction of the present invention is described in detail below.

First, the inorganic black pigment according to the present invention is described.

The inorganic black pigment according to the present invention comprises a composite oxide comprising Fe, Co and Al as well as at least one metal element selected from the group consisting of Mg, Ca, Sr, Ba, Ti, Zn, Sn, Zr, Si and Cu.

The content of Fe in the inorganic black pigment of the present invention is preferably 10 to 90 mol% based on whole metal elements contained in the black pigment. The content of Co in the inorganic black pigment of the present invention is preferably 1.0 to 70 mol% based on whole metal elements contained in the black pigment. The content of Al in the inorganic black pigment of the present invention is preferably 1.0 to 70 mol% based on whole metal elements contained in the black pigment.

When the contents of Fe, Co and Al in the inorganic black pigment is out of the above-specified ranges, the resulting pigment tends to undesirably exhibit a blackness value (L*) as large as more than 30.

The content of Fe in the inorganic black pigment of the present invention is more preferably 10 to 80 mol% and still more preferably 10 to 50 mol% based on whole metal elements contained in the black pigment. The content of Co in the inorganic black pigment of the present invention is more preferably 3.0 to 60 mol% and still more preferably 5.0 to 50 mol% based on whole metal elements contained in the black pigment. The content of Al in the inorganic black pigment of the present invention is more preferably 3.0 to 68 mol% and still more preferably 5 to 65 mol% based on whole metal elements contained in the black pigment.

The total content of Fe, Co and Al in the inorganic black pigment of the present invention is controlled such that the molar ratio of a sum of Fe, Co and Al to the whole metal elements contained in the inorganic black pigment is preferably 20 to 98 mol%, more preferably 30 to 95 mol% and still more preferably 40 to 95 mol%. When the total content of Fe, Co and Al in the inorganic black pigment is out of the above-specified range, the resulting pigment tends to undesirably exhibit a blackness value (L*) as large as more than 30.

The inorganic black pigment of the present invention preferably has a spinel-type crystal structure.

The inorganic black pigment of the present invention may inevitably comprise impurities derived from various raw materials. For example, the Cr content in the inorganic black pigment is not more than 1% by weight, in particular, the content of Cr⁶⁺ is not more than 10 ppm.

The average primary particle diameter of the inorganic black pigment of the present invention is in the range of 0.02 to 2.0 µm. When the average primary particle diameter of the inorganic black pigment is more than 2.0 µm, the particle size of the resultant pigment tends to be too large, resulting in poor tinting strength thereof. When the average primary particle diameter of the inorganic black pigment is less than 0.02 µm, it may be difficult to uniformly disperse the resultant pigment in a vehicle. The average primary particle diameter of the inorganic black pigment of the present invention is preferably 0.025 to 1.5 µm and more preferably 0.040 to 1.20 µm.

When measured with respect to secondary particle diameters of the inorganic black pigment according to the present invention, D₉₉ of the secondary particle diameters of the inorganic black pigment is 0.08 to 8.0 µm. The value D₉₉ as used herein means the particle diameter at which a cumulative volume fraction of the particles calculated with respect to particle sizes thereof assuming that a total volume of the particles is 100% is 99%. When D₉₉ of the secondary particle diameters of the inorganic black pigment is more than 8.0 µm, the particle size of the resultant pigment tends to be too large, resulting in poor tinting strength thereof. When D₉₉ of the secondary particle diameters of the inorganic black pigment is less than 0.08 µm, it may be difficult to uniformly disperse the resultant pigment in a vehicle. The value D₉₉ of the secondary particle diameters of the inorganic black pigment according to the present invention is preferably 0.5 to 7.5 µm, more preferably 0.60 to 7.0 µm and especially preferably 0.65 to 6.5 µm.

The inorganic black pigment of the present invention preferably has a BET specific surface area of 1.0 to 100 m²/g. When the BET specific surface area of the inorganic black pigment is less than 1.0 m²/g, the resultant pigment particles tend to become coarse, or sintering tends to be caused within or between the particles, resulting in poor tinting strength thereof. The BET specific surface area of the inorganic black pigment of the present invention is more preferably 1.5 to 75 m²/g and still more preferably 1.8 to 60 m²/g.

The blackness value (L*) of the inorganic black pigment of the present invention is about 30 as an upper limit thereof. When the blackness value (L*) of the inorganic black pigment is more than 30, the resulting pigment may fail to exhibit an excellent blackness degree. The blackness value (L*) of the inorganic black pigment of the present invention is more preferably not more than 25.0. The lower limit of the blackness value (L*) of the inorganic black pigment is about 5.0.

The a* value of the inorganic black pigment of the present invention is preferably -5 to +10. When the a* value of the inorganic black pigment is out of the above specified range, the resulting pigment may fail to exhibit an excellent blackness degree. The a* value of the inorganic black pigment of the present invention is more preferably -1 to +5.

The b* value of the inorganic black pigment of the present invention is preferably -5 to +10. When the b* value of the inorganic black pigment is out of the above specified range, the resulting pigment may fail to exhibit an excellent blackness degree. The b* value of the inorganic black pigment of the present invention is more preferably -1 to +5.

The infrared reflecting property of the inorganic black pigment of the present invention is controlled such that an average reflectance (visible light reflectance) thereof as measured in a visible light wavelength range of 250 to 780 nm is preferably not more than 10%. Meanwhile, the visible light reflectance may be measured by the method described in Examples below.

Also, the solar radiation reflectance of the inorganic black pigment of the present invention which is expressed by an average reflectance in the wavelength range of 300 to 2500 nm is preferably not less than 15%. When the solar radiation reflectance of the inorganic black pigment is less than 15%, the resulting pigment may fail to exhibit a sufficient infrared reflecting property. The solar radiation reflectance of the inorganic black pigment of the present invention is more preferably not less than 18%. Meanwhile, the solar radiation reflectance may be measured by the method described in Examples below.

The light transmittance of the inorganic black pigment of the present invention is controlled such that an average light transmittance (visible light transmittance) thereof as measured in a visible light wavelength range of 250 to 780 nm is not more than 10%. Meanwhile, the visible light transmittance may be measured by the method described in Examples below.

In addition, the solar radiation transmittance of the inorganic black pigment of the present invention is controlled such that an average light transmittance thereof as measured in a wavelength range of 300 to 2500 nm is preferably not less than 10%. Meanwhile, the solar radiation transmittance may be measured by the method described in Examples below.

In the present invention, the surface of the respective particles of the inorganic black pigment of the present invention may be coated with a compound of at least one element selected from the group consisting of Si, Al, Zr and Ti. The coating amount of the compound is preferably 0.1 to 10% by weight based on the weight of the inorganic black pigment.

Next, the process for producing the inorganic black pigment according to the present invention is described.

The inorganic black pigment according to the present invention may be produced by mixing various raw materials with each other and then calcining the resultant mixture.

The inorganic black pigment according to the present invention may also be produced through a wet reaction. More specifically, aqueous solutions of various water-soluble metal salts are reacted with an aqueous alkali solution to precipitate hydroxides of various metals. Then, if required after subjecting the thus precipitated metal hydroxides to aging and growth reaction, the obtained precipitates are washed, dried and then calcined to produce the aimed inorganic black pigment (wet reaction).

As the starting materials, there may be used oxides, carbonates, nitrates and sulfates of various metal elements described above.

The method of mixing the starting materials is not particularly limited, and any method may be used as long as these starting materials can be uniformly mixed with each other, and either a wet-mixing method or a dry-mixing method may be used in the present invention.

The heat-calcining temperature used upon production of the inorganic black pigment is preferably 700 to 1200°C, and the heating atmosphere may be an atmospheric air.

The particles obtained after heating may be washed with water and then pulverized by ordinary methods.

In the present invention, if coarse aggregated particles are present in the resulting particles, the obtained inorganic black pigment tends to be deteriorated in light transmittance. For this reason, it is required that the particles obtained after the heat treatment are fully pulverized to well control a particle size of secondary particles (aggregated particles) thereof. That is, it is required that the inorganic black pigment satisfies the definition that D₉₉ of the secondary particle diameters thereof is 0.08 to 8.0 *µ*m as specified in the present invention, after being subjected to pulverization treatment.

In the present invention, the pulverization treatment after the heat treatment is preferably carried out by using the pulverizing apparatuses or conditions which are capable of deaggregating the aggregated particles. Examples of the pulverizing apparatuses include a hammer mill, a sand mill, an attritor, a beads mill, a vibration mill and a jet mill. However, it is undesirable to apply an excessively strong load to the particles because an amount of fine particles included therein tends to become too large.

In the present invention, the surface of the particles of the inorganic black pigment may be coated with a compound of at least one element selected from the group consisting of Si, Al, Zr and Ti. The surface coating treatment may be conducted by an ordinary method such as a wet method and a dry method.

In the wet coating method, for example, a soluble compound of at least one element selected from the group consisting of Si, Al, Zr and Ti may be added to and mixed in a wet-dispersed slurry of the inorganic black pigment while controlling the pH value of the slurry with an acid or an alkali to coat the particles of the inorganic black pigment with the soluble compound. In the dry coating method, the inorganic black pigment may be coated with a coupling agent comprising at least one element selected from the group consisting of Si, Al, Zr and Ti in a suitable apparatus such as a Henschel mixer.

Next, the paint comprising the inorganic black pigment according to the present invention is described.

The amount of the inorganic black pigment compounded in the paint of the present invention may be 0.5 to 100 parts by weight on the basis of 100 parts by weight of a paint base material. From the viewpoint of a good handling property of the obtained paint, the amount of the inorganic black pigment compounded in the paint is preferably 1.0 to 100 parts by weight.

The paint base material may comprise a resin, a solvent and, if required, an optional component such as fats and oils, a defoaming agent, an extender pigment, a drying accelerator, a surfactant, a curing accelerator and an assistant.

As the resin, there may be used various resins ordinarily used for solvent-based paints or oil-based printing inks. Specific examples of the resin may include acrylic resins, alkyd resins, polyester resins, polyurethane resins, epoxy resins, phenol resins, melamine resins, amino resins, vinyl chloride resins, silicone resins, rosin-based resins such as gum rosins and lime rosins, maleic acid resins, polyamide resins, nitrocellulose, ethylene-vinyl acetate copolymer resins, rosin-modified resins such as rosin-modified phenol resins and rosin-modified maleic acid resins, and petroleum resins. In particular, as the resins for water-based paints, there may be used those resins ordinarily used for water-based paints or water-based inks. Specific examples of the resins for water-based paints may include water-soluble acrylic resins, water-soluble styrenemaleic acid resins, water-soluble alkyd resins, water-soluble melamine resins, water-soluble urethane emulsion resins, water-soluble epoxy resins, water-soluble polyester resins, etc.

As the solvent, there may be used those solvents ordinarily used for solvent-based paints. Specific examples of the solvent may include soybean oil, toluene, xylene, a thinner, butyl acetate, methyl acetate, methyl isobutyl ketone, methyl cellosolve, ethyl cellosolve, propyl cellosolve, butyl cellosolve, glycol ether-based solvents such as propylene glycol monomethyl ether, ester-based solvents such as ethyl acetate, butyl acetate and amyl acetate, aliphatic hydrocarbon-based solvents such as hexane, heptane and octane, alicyclic hydrocarbon-based solvents such as cyclohexane, petroleum-based solvents such as mineral spirits, ketone-based solvents such as acetone and methyl ethyl ketone, alcohol-based solvents such as methyl alcohol, ethyl alcohol, propyl alcohol and butyl alcohol, and aliphatic hydrocarbons.

As the solvents for water-based paints, there may be used mixtures of water with water-soluble organic solvents ordinarily used for water-based paints. Examples of the water-soluble organic solvents may include alcohol-based solvents such as ethyl alcohol, propyl alcohol and butyl alcohol, glycol ether-based solvents such as methyl cellosolve, ethyl cellosolve, propyl cellosolve and butyl cellosolve, oxyethylene or oxypropylene addition polymers such as diethylene glycol, triethylene glycol, polyethylene glycol, dipropylene glycol, tripropylene glycol and polypropylene glycol, alkylene glycols such as ethylene glycol, propylene glycol and 1,2,6-hexanetriol, glycerol and 2-pyrrolidone.

Examples of the fats and oils may include boiled oils obtained by processing dry oils such as linseed oil, tung oil, oiticica oil and safflower oil.

Examples of the defoaming agent may include commercially available products such as "NOPCO 8034 (tradename)", "SN DEFOAMER 477 (tradename)", "SN DEFOAMER 5013 (tradename)", "SN DEFOAMER 247 (tradename)" and "SN DEFOAMER 382 (tradename)" all produced by Sun Nopco Co., Ltd., and "ANTI-FOAM 08 (tradename)" and "EMULGEN 903 (tradename)" both produced by Kao Corp.

Examples of extender pigments usable in the inorganic black pigment of the present invention include SiO₂, CaCO₃ Mg(OH)₂, Al(OH)₃, kaolin, mica, hydrotalcite, clay, barium sulfate, talc and transparent titanium oxide, etc.

In the present invention, the particle size of the aggregated particles of the inorganic black pigment which are present in the paint may be evaluated by suitably controlling a concentration of the paint comprising the inorganic black pigment and then measuring diameters of the particles therein according to a wet laser diffraction and scattering method.

Next, the resin composition comprising the inorganic black pigment according to the present invention is described.

The amount of the inorganic black pigment compounded in the resin composition of the present invention is in the range of 0.01 to 200 parts by weight on the basis of 100 parts by weight of a resin component contained in the resin composition. From the viewpoint of a good handling property of the obtained resin composition, the amount of the inorganic black pigment compounded therein is preferably 0.05 to 150 parts by weight and more preferably 0.1 to 100 parts by weight.

The materials constituting the resin composition of the present invention comprise the inorganic black pigment and a known thermoplastic resin, and may also comprise, in addition to these components, various optional additives such as a lubricant, a plasticizer, an antioxidant, an ultraviolet absorber, an extender pigment and various stabilizers, if required.

Examples of the thermoplastic resin used in the resin composition include polyolefins such as polyethylene, polypropylene, polybutene and polyisobutylene; thermoplastic resins such as polyvinyl chloride, polymethyl pentene, polyethylene terephthalate, polybutylene terephthalate, polystyrene, styrene-acrylate copolymers, styrene-vinyl acetate copolymers, acrylonitrile-butadiene-styrene copolymers, acrylonitrile-EPDM-styrene copolymers, acrylic resins, polyamides, polycarbonates, polyacetals and polyurethanes; rosin-modified maleic acid resins; phenol resins; epoxy resins; polyester resins; silicone resins; rosin esters; rosins; natural rubbers; and synthetic rubbers.

The amount of the additives added may be not more than 50% by weight on the basis of a total weight of the inorganic black pigment and the thermoplastic resin. When the content of the additives in the resin composition is more than 50% by weight, the obtained resin composition tends to be deteriorated in moldability.

The resin composition of the present invention may be produced by previously intimately mixing the raw thermoplastic resin material with the inorganic black pigment, and then applying a strong shear force to the resultant mixture under heating by using a kneader or an extruder to break and deaggregate agglomerated particles of the inorganic black pigment and uniformly disperse the inorganic black pigment in the resin composition. Then, the resultant resin composition may be molded into a desired shape according to the objects and requirements upon use.

In the present invention, the particle size of the aggregated particles of the inorganic black pigment which are present in the resin composition may be determined either by dissolving a resin component of the resin composition in an organic solvent, etc., to remove the resin component from the resin composition and prepare a dispersion comprising the inorganic black pigment, adjusting a concentration of the resulting dispersion and and then evaluating the particle size of particles in the dispersion by a wet laser diffraction scattering method, or by observing the resin composition as such using an electron microscope to measure the particle size of the aggregated particles therein and then calculate a particle size distribution thereof.

Also, the resin composition of the present invention may be obtained via master batch pellets.

The master batch pellets used in the present invention may be produced by mixing a binder resin as the paint base material or the resin composition base material with the inorganic black pigment, if required, by using a mixing apparatus such as a ribbon blender, a Nauter mixer, a Henschel mixer and a super mixer, and then kneading and molding the resultant mixture by using a known apparatus such as a single-screw and a twin-screw kneading extruder, etc., followed by cutting the resultant molded material, or may be produced by kneading the above mixture by using a Banbury mixer, a pressing kneader, etc., and then subjecting the resultant kneaded material to pulverization or molding, followed by cutting the resulting pulverized or molded material.

Upon feeding the binder resin and the inorganic black pigment to the kneader, these materials may be individually fed thereto at predetermined ratios, or a mixture of both the materials may be fed thereto.

The average major axis diameter of the master batch pellets used in the present invention is in the range of 1 to 6 mm and preferably 2 to 5 mm, whereas the average minor axis diameter thereof is in the range of 2 to 5 mm and preferably 2.5 to 4 mm. When the average major axis diameter of the master batch pellets is less than 1 mm, a workability upon production of the pellets tends to be deteriorated. When the average major axis diameter of the master batch pellets is more than 6 mm, the difference in size between the master batch pellets and diluting binder resin particles tends to be considerably large, so that it may be difficult to sufficiently disperse the pellets in the diluting binder resin. The master batch pellets may have various shapes such as, for example, an amorphous shape, a granular shape such as a spherical shape, a cylindrical shape, a flake-like shape, etc.

The binder resin used for production of the master batch pellets in the present invention may be the same as the resin used in the resin composition.

Meanwhile, the composition of the binder resin used in the master batch pellets may be the same as or different from that of the diluting binder resin. When using the resin having a different composition from that of the diluting binder resin, the resins to be used may be determined in the consideration of various properties so as to attain a good compatibility between these resins.

The amount of the inorganic black pigment blended in the master batch pellets is 1 to 200 parts by weight, preferably 1 to 150 parts by weight and more preferably 1 to 100 parts by weight on the basis of 100 parts by weight of the binder resin. When the amount of the inorganic black pigment blended in the master batch pellets is less than 1 part by weight, the melt viscosity of the blended mixture upon kneading tends to be insufficient, so that it may be difficult to suitably disperse and mix the inorganic black pigment in the resin composition. When the amount of the inorganic black pigment blended in the master batch pellets is more than 200 parts by weight, the amount of the binder resin tends to be comparatively smaller than that of the inorganic black pigment, so that it may be difficult to suitably disperse and mix the inorganic black pigment in the resin composition. Further, in such a case, a slight change in amount of the master batch pellets added tends to cause a considerable change in content of the inorganic black pigment in the resin composition, so that it may be difficult to attain a desired content of the inorganic black pigment in the resin composition, or severe mechanical abrasion tends to be caused.

Next, the agricultural multi-film into which the inorganic black pigment is compounded according to the present invention is described.

The amount of the inorganic black pigment compounded in the agricultural multi-film according to the present invention may be in the range of 1 to 10% by weight based on the total weight of the inorganic black pigment and the resin component. When the amount of the inorganic black pigment compounded in the multi-film is less than 1% by weight, the resulting agricultural multi-film may fail to realize efficient cultivation. When the amount of the inorganic black pigment compounded in the multi-film is more than 10% by weight, although the resulting agricultural multi-film still exhibits a suitable function as an agricultural film, addition of such a more than necessary amount of the inorganic black pigment is unnecessary and meaningless.

Examples of the resin used in the agricultural multi-film according to the present invention include polymers and copolymers of olefins such as ethylene, propylene, butene-1 and vinyl acetate. Specific examples of the resin include polyethylenes such as LLPE and LDPE, polypropylene, ethylene-propylene copolymers, ethylene-butene-1 copolymers, ethylene-vinyl acetate copolymers and ethylene-α-olefin copolymers. Among these resins, polyethylenes, ethylene-α-olefin copolymers and ethylene-vinyl acetate copolymers having a vinyl acetate content of not more than 25% by weight are preferred in view of a transparency, a weather resistance and a low price of the resulting agricultural multi-film.

Upon production of the agricultural multi-film according to the present invention, various conventionally known additives may be appropriately added thereto, if required. Examples of the additives include lubricants, light stabilizers, antioxidants, anti-blocking agents, antistatic agents, ultraviolet absorbers, fog preventives, defogging agents, pigments, dyes and thermal stabilizers.
In addition, in the present invention, the above-mentioned extender pigment may be added to the agricultural multi-film.

The agricultural multi-film according to the present invention may have a laminated structure, if required.

Next, the method for producing the agricultural multi-film according to the present invention is described.

The agricultural multi-film according to the present invention may be produced by charging the inorganic black pigment of the present invention and the resin into a mixer such as, for example, a ribbon blender, a Nauter mixer, a Banbury mixer, a super mixer and a Henschel mixer and then mixing these materials with each other according to an ordinary method; melting and kneading the obtained mixture using an extruder, a Banbury mixer, a pressure kneader, etc.; and then forming the obtained kneaded material into a film by an inflation molding method, a T-die molding method, etc.

Also, in the present invention, the resin and the inorganic black pigment may be previously mixed with each other at a predetermined mixing ratio to prepare pellets, and the agricultural multi-film may be produced using the pellets.

### <Function>

The most important point of the present invention resides in such a fact that the inorganic black pigment of the present invention comprises no harmful elements, and is excellent in infrared reflection property and light transmittance.

The reason why the inorganic black pigment of the present invention is excellent in infrared reflection property and light transmittance is considered as follows, although not clearly determined. That is, as apparently recognized from the below-mentioned Examples and Comparative Examples, the inorganic black pigment having the specific composition (i.e., comprising, in addition to Fe, Co and Al, at least one metal selected from the group consisting of Mg, Ca, Sr, Ba, Ti, Zn, Sn, Zr, Si and Cu) has a black color, can be enhanced in solar radiation reflectance (300 to 2500 nm), and further can exhibit a high light transmittance by controlling a particle size of secondary particles (aggregated particles) thereof.

In addition, the inorganic black pigment of the present invention comprises no harmful elements such as Cr⁶⁺ and therefore can provide a safe pigment.

### EXAMPLES

Typical examples of the present invention are described below.

The average primary particle diameter of the particles was expressed by an average value of particle diameters of 350 particles respectively observed and measured on an electron microphotograph thereof.

The secondary particle diameter (D₉₉) of the aggregated particles was determined by evaluating a particle size of non-dispersed aggregated particles according to the particles diameter at which a cumulative fraction of particle size distribution of the particles as measured under an air flow-dispersed pressure of 5 bar using a particle size distribution analyzer ("HELOS & RODOS") was 99%.

The specific surface area was expressed by the value measured by a BET method.

The contents of respective metal elements in the inorganic black pigment were measured by a fluorescent X-ray analyzer "3063M Model" (manufactured by RIGAKU DENKI KOGYO CO., LTD.) according to JIS K0119 "General rule of fluorescent X-ray analysis".

The amount of Cr⁶⁺ was measured by an ICP emission spectrophotometer manufactured by SSI Nano-Technology Co., Ltd., according to JIS K0102, 65.2.4 "ICP emission spectral analysis".

The hues of the inorganic black pigment (L* value, a* value and b* value) were measured by the following method.
That is, 0.5 g of each sample and 0.5 mL of castor oil were intimately kneaded with each other by a Hoover's muller to obtain a paste. 4.5 g of clear lacquer was added to the obtained paste, and the resulting mixture was intimately kneaded to form a paint. The obtained paint was applied on a cast-coated paper by using a 150 µm (6-mil) applicator to produce a coating film piece (having a film thickness of about 30 µm). The hue values of the coating film piece were measured using a Multi-Spectro-Colour-Meter "MSC-IS-2D" (manufactured by SUGA SHIKENKI CO., LTD.), and expressed by color specification indices (L* value, a* value and b* value) according to JIS Z 8729.

The reflection property of the infrared reflecting black pigment in a wavelength range including both of a visible region and an infrared region was determined as follows. That is, a reflectance value of the coating film piece prepared for the above hue measurement was measured in a wavelength range of 250 to 780 nm in a visible region and in a wavelength range of 300 to 2500 nm in a visible-to-infrared region according to JIS R3106 "Testing method on transmittance, reflectance and emittance of flat glasses and evaluation of solar heat gain coefficient" by using a Hitachi spectrophotometer "U-4100", and a reflection property of the inorganic black pigment was expressed by an average reflectance of the respective film pieces.

The light transmittance in a visible region of the inorganic black pigment was determined as follows. That is, the coating film piece was prepared in the same manner as defined in the above hue measurement except that the cast-coated paper used for the hue measurement was replaced with a transparent 100 µm-thick PET film. The light transmittance value of the thus prepared coating film piece was measured in a wavelength range of 250 to 780 nm in a visible region and in a wavelength range of 300 to 2500 nm in a visible-to-infrared region according to JIS R3106 "Testing method on transmittance, reflectance and emittance of flat glasses and evaluation of solar heat gain coefficient" by using a Hitachi spectrophotometer "U-4100", and a light transmittance of the inorganic black pigment was expressed by an average light transmittance of the respective film pieces.

### Example 1:

CoO, Al₂O₃ MgO and Fe₂O₃ were weighed and mixed with each other such that the resulting mixture had a composition represented by the following formula:

(CoO)ₓ•(MgO)₁₋ₓ•n[(Fe_{y}Al_{1-y})₂O₃]

(wherein x = 0.5; y = 0.5; n = 1). Then, the mixture was calcined in an atmospheric air at 1100°C for 2 hr to obtain a calcined product. The resulting calcined product was subjected to finish pulverization using a hammer mill, thereby obtaining an inorganic black pigment. As a result, it was confirmed that the thus obtained inorganic black pigment had an average primary particle diameter (average particle diameter) of 0.7 µm and a secondary aggregated particle diameter (D₉₉) of 5.9 µm as well as exhibited a spinel-type crystal structure.

The bulk density of the inorganic black pigment was 0.40 g/cm³ as measured by the method described in JIS K 5101-12-1 "Loose packing method". When 20 g of the pigment were weighed in a measuring cylinder having a diameter of 1 inch and compressed under an applied pressure of 1 ton/cm², it was confirmed that the compressed density (1 ton/cm²) of the pigment as calculated based on a volume thereof upon the compression was 2.1 g/cm³. The powder pH value of the inorganic black pigment as measured by the method described in JIS K 5101-17-1 "Hot extraction method" was 8.9. The water content of the inorganic black pigment as measured using a Karl Fischer moisture meter "MKC-510" manufactured by Kyoto Electronics Manufacturing Co., Ltd., was 0.13% by weight. The true specific gravity of the inorganic black pigment as measured by the method described in JIS K 5101-11-1 "pycnometer method" was 4.8 g/cm³. The oil absorption of the inorganic black pigment as measured by the method described in JIS K 5101-13-1 "linseed oil method" was 30 mL/100 g. Among the magnetic properties of the inorganic black pigment, the saturation magnetization value thereof as measured by applying an external magnetic field of 10 kOe thereto was 10.9 emu/g.

Further, it was also confirmed that the obtained inorganic black pigment had an average reflectance of 5.6% as measured in a wavelength range of 250 to 780 nm in a visible region, and an average reflectance (solar radiation reflectance) of 18% as measured in a wavelength range of 300 to 2500 nm in a visible-to-infrared region.

In addition, it was also confirmed that the obtained inorganic black pigment had an average light transmittance of 0.2% as measured in a wavelength range of 250 to 780 nm in a visible region, and an average light transmittance (solar radiation transmittance) of 13% as measured in a wavelength range of 300 to 2500 nm in a visible-to-infrared region.

### <Production of master batch>

The inorganic black pigment and an EVA resin having a vinyl acetate concentration of 15% were mixed with each other using a twin-screw kneader such that the concentration of the inorganic black pigment in the resulting mixture was 40% to prepare a master batch thereof, thereby obtaining master batch pellets having an average major axis diameter of 2.5 mm and a minor axis diameter of 2.3 mm.

### <Production of agricultural film>

Using an inflation film-forming machine, there was prepared an agricultural film including polyethylene layers as both outer layers each having a thickness of 20 µm and an intermediate layer formed from a 6% diluted solution of the EVA master batch comprising 40% of the inorganic black pigment, and having a total thickness of 100 µm. The total content of the pigment in the resulting agricultural film was 3.6%.

As a result, it was confirmed that the obtained agricultural film had a visible light transmittance of 0.2% and a solar radiation transmittance of 13%.

### Example 2 and Comparative Examples 1 to 3:

The same procedure as defined in Example 1 was conducted except that the raw materials and the composition ratios of the raw materials were changed variously, thereby obtaining inorganic black pigments.

The production conditions used above are shown in Table 1, and various properties of the thus obtained inorganic black pigments are shown in Table 2, and further various properties of the coating films using the inorganic black pigments are shown in Table 3. Meanwhile, the magnetite used in Comparative Example 3 was "MAT-305" produced by Toda Kogyo Corporation.

### Example 3:

The same procedure as defined in Example 1 was conducted except that the raw materials and the composition ratios of the raw materials were changed variously, thereby obtaining an inorganic black pigment. Next, the thus obtained inorganic black pigment was wet-dispersed in water to obtain a slurry thereof. While dropping 1% by weight of a water glass to the slurry of the inorganic black pigment maintained at 70°C, the pH value of the slurry was adjusted to 7 with hydrochloric acid and sodium hydroxide, and then the slurry was allowed to stand for one hour. Thereafter, the resulting slurry was subjected to water-washing, drying and pulverization treatment.

### Example 4:

The same procedure as defined in Example 3 was conducted except that the raw materials and the composition ratios of the raw materials were changed variously, thereby obtaining an inorganic black pigment.

In the column "Crystal structure" in Table 2, "Spinel" means a spinel type crystal structure. Meanwhile, the Cr⁶⁺ content of ">5ppm (less than 5 ppm)" means that the content of Cr⁶⁺ is below a detection limit of the measuring apparatus used.

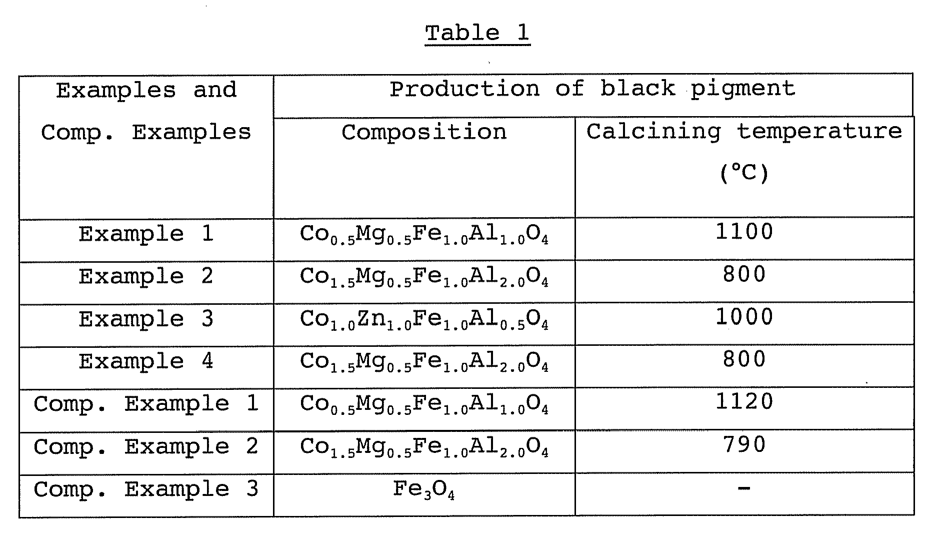

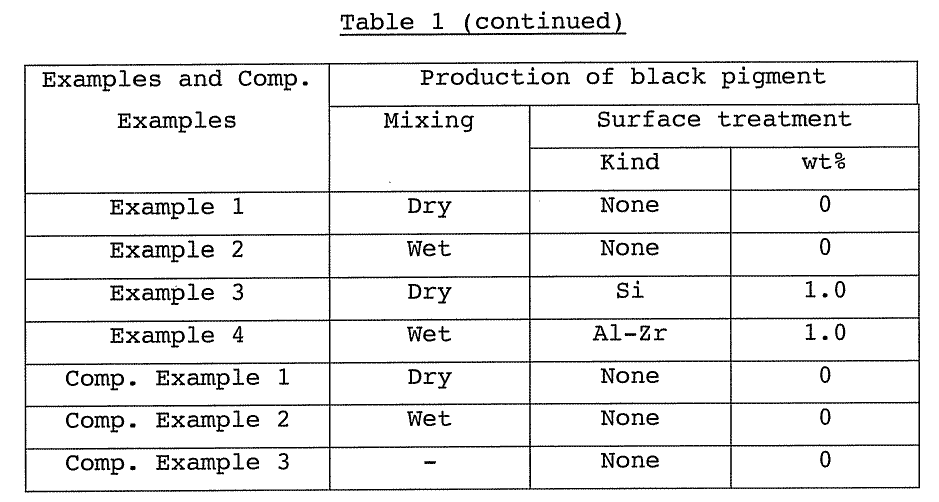

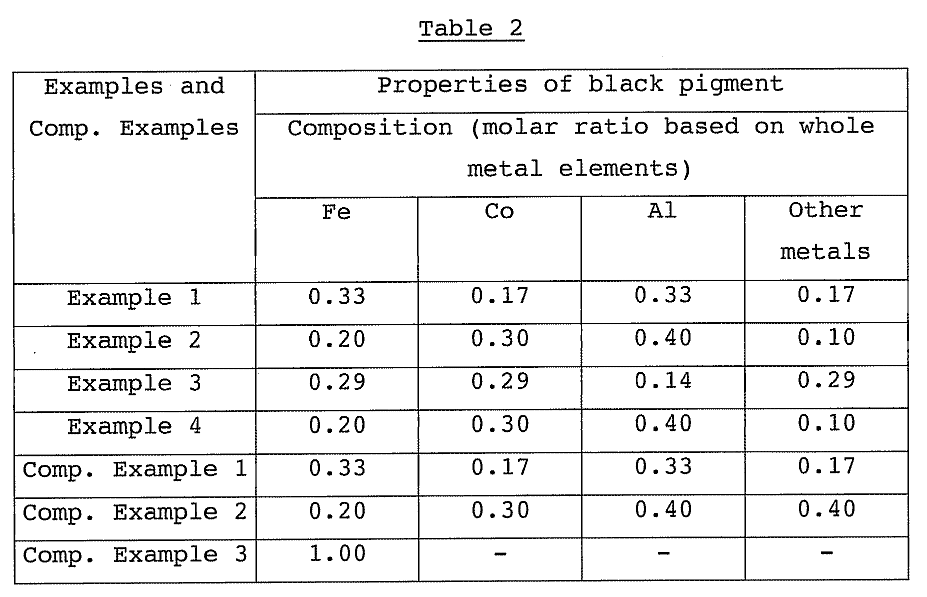

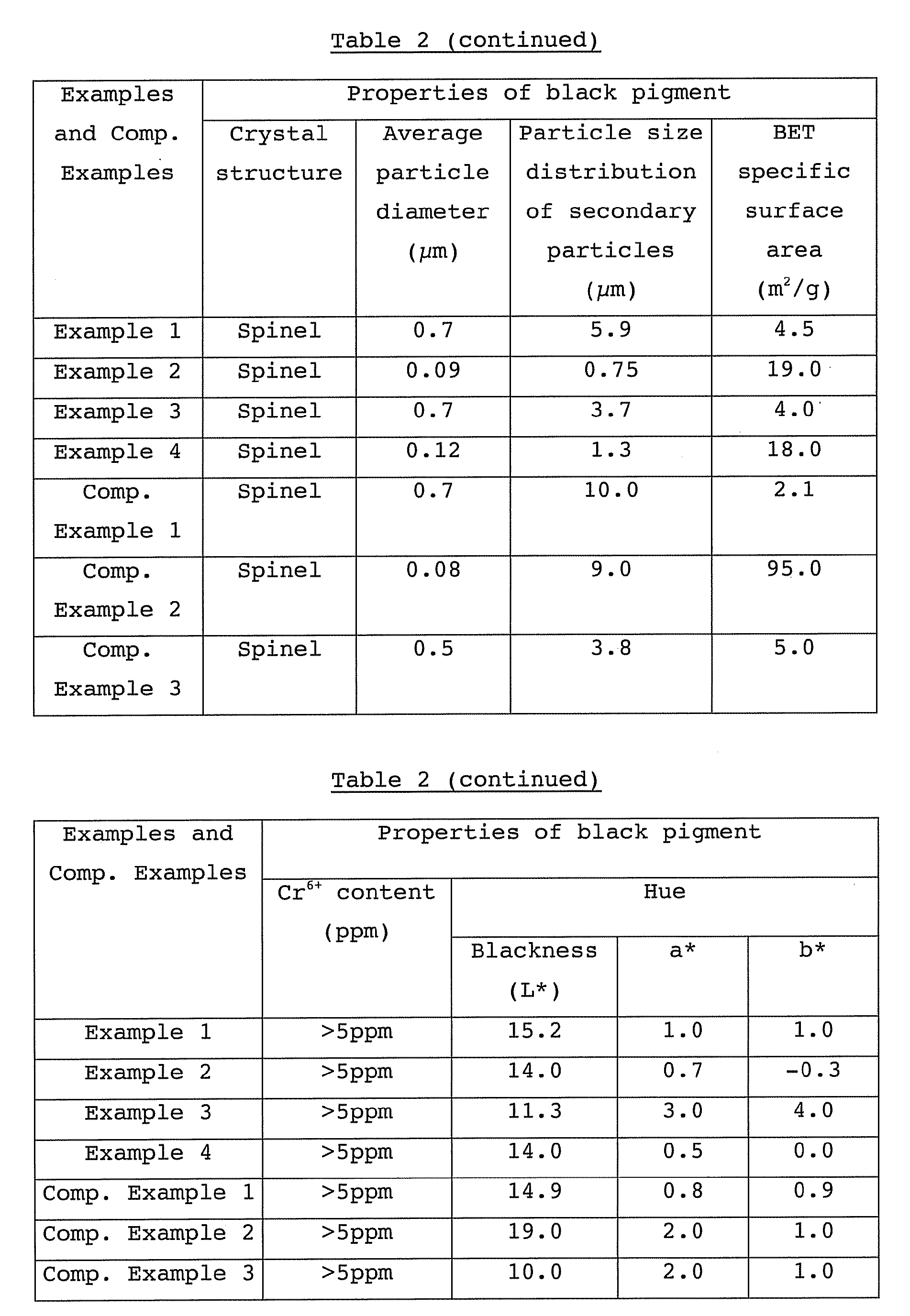

**Table 3**

| Examples and Comp. Examples | Properties of coating film (reflectance %) | | Properties of coating film (transmittance %) | |
|---|---|---|---|---|
| | Visible light reflectance (%) | Solar radiation reflectance (%) | Visible light transmittance (%) | Solar radiation transmittance (%) |
| Example 1 | 5.6 | 18 | 0.2 | 13 |
| Example 2 | 5.2 | 19 | 0.3 | 12 |
| Example 3 | 9 | 22 | 1.2 | 11 |
| Example 4 | 5 | 18 | 0.5 | 12 |
| Comp. Example 1 | 5.4 | 20 | 0.5 | 6 |
| Comp. Example 2 | 5 | 18 | 0.3 | 9 |
| Comp. Example 3 | 5 | 5 | 0.2 | 4 |

The inorganic black pigment of the present invention is excellent in infrared reflection property and light transmittance and therefore can be suitably used as a black pigment for agricultural multi-films.

## Claims

1. An inorganic black pigment which comprises a composite oxide comprising Fe, Co and Al as well as at least one metal element selected from the group consisting of Mg, Ca, Sr, Ba, Ti, Zn, Sn, Zr, Si and Cu, and which inorganic black pigment has an average primary particle diameter of 0.02 to 2.0 µm and a secondary particle diameter D₉₉ of 0.08 to 8.0 µm.

2. An inorganic black pigment according to claim 1,
wherein the inorganic black pigment has a visible light reflectance of not more than 10% and a solar radiation reflectance of not less than 15%.

3. An inorganic black pigment according to claim 1,
wherein the inorganic black pigment has a visible light transmittance of not more than 10% and a solar radiation transmittance of not less than 10%.

4. A paint comprising the inorganic black pigment as defined in any one of claims 1 to 3, and a paint base material.

5. A colored resin composition comprising the inorganic black pigment as defined in any one of claims 1 to 3, and a thermoplastic resin.

6. An agricultural multi-film comprising the inorganic black pigment as defined in any one of claims 1 to 3, and a thermoplastic resin.

7. A paint comprising an inorganic black pigment and a paint base material, which inorganic black pigment in the paint comprises a composite oxide comprising Fe, Co and Al as well as at least one metal element selected from the group consisting of Mg, Ca, Sr, Ba, Ti, Zn, Sn, Zr, Si and Cu, and has an average primary particle diameter of 0.02 to 2.0 µm and a secondary particle diameter D₉₉ of 0.08 to 8.0 *µ*m.

8. A colored resin composition comprising an inorganic black pigment and a thermoplastic resin, which inorganic black pigment in the colored resin composition comprises a composite oxide comprising Fe, Co and Al as well as at least one metal element selected from the group consisting of Mg, Ca, Sr, Ba, Ti, Zn, Sn, Zr, Si and Cu, and has an average primary particle diameter of 0.02 to 2.0 µm and a secondary particle diameter D₉₉ of 0.08 to 8.0 µm.

9. An agricultural multi-film comprising an inorganic black pigment and a thermoplastic resin, which inorganic black pigment in the agricultural multi-film comprises a composite oxide comprising Fe, Co and Al as well as at least one metal element selected from the group consisting of Mg, Ca, Sr, Ba, Ti, Zn, Sn, Zr, Si and Cu, and has an average primary particle diameter of 0.02 to 2.0 µm and a secondary particle diameter D₉₉ of 0.08 to 8.0 µm.
